# EUROPEAN PATENT APPLICATION

(11) **EP 4 679 465 A1**
(43) Date of publication of application: **14.01.2026**
(21) Application number: 23926027.6
(22) Date of filing: 17.11.2023
(51) Int. Cl.: H01G 4/228, H01G 4/224

(54) **CAPACITOR, ELECTRIC MOTOR CONTROLLER AND VEHICLE**

(30) Priority: 03.03.2023 CN 202320498914 U
(71) Applicant: BYD Company Limited, Shenzhen, Guangdong 518118 (CN)
(72) Inventor: LING, Heping, Shenzhen, Guangdong 518118 (CN); ZHAI, Zhen, Shenzhen, Guangdong 518118 (CN); TANG, Chengbo, Shenzhen, Guangdong 518118 (CN); ZHOU, Long, Shenzhen, Guangdong 518118 (CN); ZHU, Jianing, Shenzhen, Guangdong 518118 (CN)
(74) Representative: Mathys & Squire
(86) International application number: PCT/CN2023/132451
(87) International publication number: WO 2024/183332

(57) **Abstract**

Provided are a capacitor, a motor controller, and a vehicle. The capacitor includes: a capacitor core, located in a housing; a first external terminal, electrically connected to a first end of the capacitor core and including a first lead-out terminal located outside the housing; a second external terminal, electrically connected to a second end of the capacitor core and including a second lead-out terminal located outside the housing; a third external terminal, electrically connected to the first end of the capacitor core and including a third lead-out terminal located outside the housing; and a fourth external terminal, electrically connected to the second end of the capacitor core and including a fourth lead-out terminal located outside the housing. The first lead-out terminal extends out of the housing in a first direction. The second lead-out terminal and the first lead-out terminal are stacked in a second direction perpendicular to the first direction.

## Description

### CROSS-REFERENCE TO RELATED APPLICATIONS

The present disclosure claims priority to Chinese Patent Application No. 202320498914.X, filed with the China National Intellectual Property Administration on March 3, 2023 and entitled "CAPACITOR, MOTOR CONTROLLER, AND VEHICLE", which is incorporated herein by reference in its entirety.

### TECHNICAL FIELD

The present disclosure relates to the field of capacitor technologies, and in particular, to a capacitor, a motor controller, and a vehicle.

### BACKGROUND

A basic structure of a capacitor includes two metal plates with insulating media in between. Both ends of the two metal plates can be connected to different polarities of a circuit, respectively, to have a function of "blocking a direct current while passing an alternating current" in the circuit. When the capacitor is applied to an alternating current circuit, an alternating current oscillates at both ends of the capacitor to generate stray inductance. Presence of the stray inductance causes problems such as loss or signal attenuation in a circuit system, thereby reducing stability of the capacitor itself, and affecting functions of other devices in the circuit.

### SUMMARY

An objective of the present disclosure is to provide a capacitor, a motor controller, and a vehicle. The capacitor can reduce the stray inductance and improve stability and an anti-interference capability of the capacitor.

To achieve the foregoing objective, a first aspect of the present disclosure provides a capacitor, including:
a housing;
a capacitor core, located in the housing; and
a first external terminal, electrically connected to a first end of the capacitor core, wherein the first external terminal includes a first lead-out terminal located outside the housing;
a second external terminal, electrically connected to a second end of the capacitor core, wherein the second external terminal includes a second lead-out terminal located outside the housing;
a third external terminal, electrically connected to the first end of the capacitor core, wherein the third external terminal includes a third lead-out terminal located outside the housing; and
a fourth external terminal, electrically connected to the second end of the capacitor core, wherein the fourth external terminal includes a fourth lead-out terminal located outside the housing.

Both the first lead-out terminal and the second lead-out terminal are configured to connect to a first external load apparatus. Both the third lead-out terminal and the fourth lead-out terminal are configured to connect to a second external load apparatus. The first lead-out terminal and the third lead-out terminal are located on different sides of the housing. The second lead-out terminal and the fourth lead-out terminal are located on different sides of the housing. The first lead-out terminal extends out of the housing in a first direction, and the second lead-out terminal and the first lead-out terminal are stacked in a second direction perpendicular to the first direction.

According to an embodiment of the present disclosure, both the first lead-out terminal and the second lead-out terminal extend out of the housing from a first side of the housing. Both the third lead-out terminal and the fourth lead-out terminal extend out of the housing from a second side of the housing. The first side of the housing is opposite to the second side of the housing.

According to an embodiment of the present disclosure, heights of the third lead-out terminal and the fourth lead-out terminal are different.

According to an embodiment of the present disclosure, a projection of the first lead-out terminal in the second direction is completely located within a projection of the second lead-out terminal in the second direction; or
the projection of the second lead-out terminal in the second direction is completely located within the projection of the first lead-out terminal in the second direction.

According to an embodiment of the present disclosure, a spacing between the first lead-out terminal and the second lead-out terminal in the second direction is less than or equal to 1 mm.

According to an embodiment of the present disclosure, in a width direction of the first lead-out terminal, a width of the first lead-out terminal is the same as a width of the second lead-out terminal, and the width direction is perpendicular to the first direction.

According to an embodiment of the present disclosure, the first external terminal further includes a first extension section. One end of the first extension section is electrically connected to the first end of the capacitor core, and the other end of the first extension section is electrically connected to the first lead-out terminal.

The second external terminal includes a second extension section. One end of the second extension section is electrically connected to the second end of the capacitor core, and the other end of the second extension section is electrically connected to the second lead-out terminal.

At least a part of the first extension section and at least a part of the second extension section are stacked.

According to an embodiment of the present disclosure, the capacitor further includes a power isolation sheet. At least a part of the power isolation sheet is disposed between the first lead-out terminal and the second lead-out terminal. The power isolation sheet is provided with a first edge away from the housing, a second edge located on one side of the first edge, and a third edge located on the other side of the first edge. The first edge, the second edge, and the third edge all protrude from the first lead-out terminal and/or the second lead-out terminal.

According to an embodiment of the present disclosure, the housing is filled with an epoxy colloid, and the epoxy colloid is formed by curing an epoxy structural adhesive through a stepwise heating process.

According to an embodiment of the present disclosure, the capacitor further includes a thermally conductive plate. A thermally conductive plate mounting groove is formed on the housing, and the thermally conductive plate is embedded in the thermally conductive plate mounting groove.

A second aspect of the present disclosure provides a motor controller, including a power device and the capacitor. The power device is the first external load apparatus.

According to an embodiment of the present disclosure, the power device is provided with a first connection terminal and a second connection terminal. The first lead-out terminal is connected to the first connection terminal through a fusion welding process, and the second lead-out terminal is connected to the second connection terminal through the fusion welding process.

A third aspect of the present disclosure provides a vehicle, including a battery pack and the motor controller. The battery pack is the second external load apparatus.

In the capacitor provided in the present disclosure, the capacitor enables good separation between the first lead-out terminal and the third lead-out terminal, and good separation between the second lead-out terminal and the fourth lead-out terminal, thereby avoiding enhanced coupling between stray inductances having the same direction, and reducing mutual influence between inductances generated by the capacitor. In addition, a magnetic field generated at the first lead-out terminal and a magnetic field generated at the second lead-out terminal can at least partially cancel each other, thereby reducing stray inductance on the capacitor, reducing influence of the inductance on the circuit, and improving stability and the anti-interference capability of the capacitor.

Other features and advantages of the present disclosure will be described in detail in the following specific implementations.

### BRIEF DESCRIPTION OF THE DRAWINGS

The accompanying drawings are intended to provide a further understanding of the present disclosure, form a part of this specification, and together with the following specific implementations, are used to explain the present disclosure, but do not constitute a limitation on the present disclosure. In the accompanying drawings:
FIG. 1 is a diagram of a capacitor, a first external load apparatus, and a second external load apparatus according to an example implementation of the present disclosure;
FIG. 2 is a side view of a capacitor according to an example implementation of the present disclosure;
FIG. 3 is a top view of a capacitor according to an example implementation of the present disclosure with a housing and an epoxy colloid hidden;
FIG. 4 is a three-dimensional view of a capacitor according to an example implementation of the present disclosure;
FIG. 5 is a three-dimensional view of a capacitor according to an example implementation of the present disclosure with a housing and an epoxy colloid hidden;
FIG. 6 is a three-dimensional view of a capacitor according to an example implementation of the present disclosure from another perspective with a housing and an epoxy colloid hidden; and
FIG. 7 is an enlargement view of part "A" in FIG. 6.

### DESCRIPTION OF EMBODIMENTS

The following describes in detail specific implementations of the present disclosure with reference to the accompanying drawings. It will be understood that the specific implementations described herein are only used to illustrate and explain the present disclosure and are not intended to limit the present disclosure.

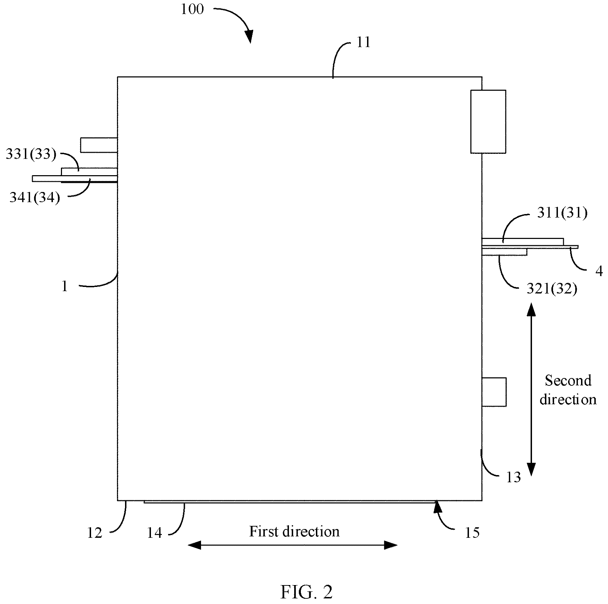

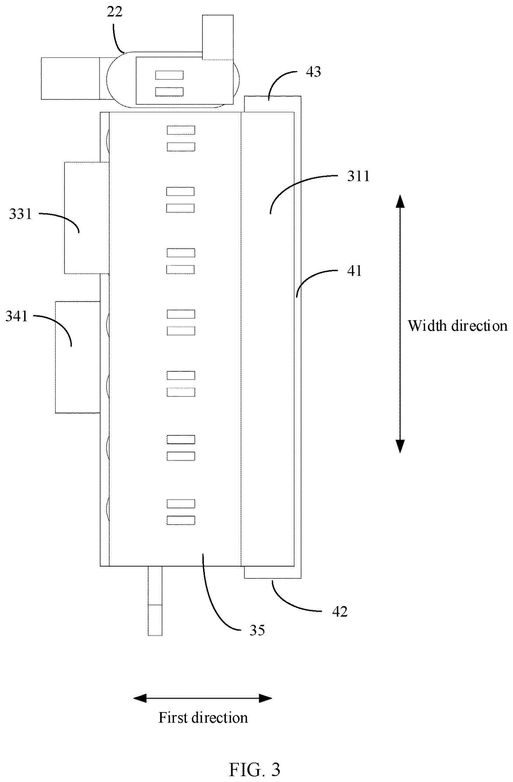

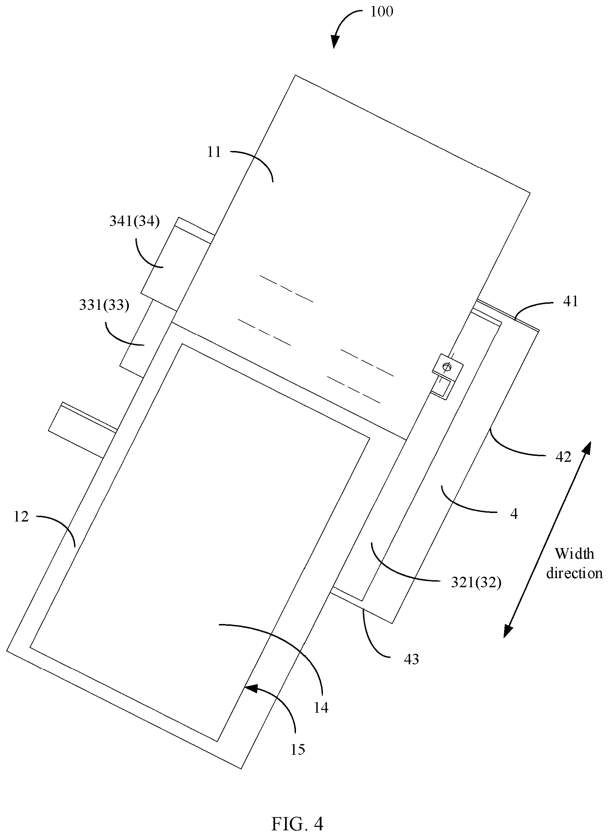

In the present disclosure, unless otherwise specified, among direction terms used, for example, "a first direction" generally means a first direction as shown in FIG. 2 and FIG. 3, "a second direction" generally means a second direction as shown in FIG. 2, "a width direction" generally means a width direction as shown in FIG. 3 and FIG. 4, and "an inner side and an outer side" mean an inner side and an outer side of contours of related components. In addition, it should be noted that terms such as "a first" and "a second" are used to distinguish one element from another, and do not imply any order or degree of importance. In addition, in the description with reference to the accompanying drawings, the same reference numerals in different accompanying drawings indicate the same elements.

In the related art, a capacitor generates stray inductance under an action of an alternating current. Presence of stray inductance causes problems such as loss or signal attenuation in a circuit system. In an application scenario where a capacitor is disposed in a motor controller of a vehicle, the capacitor is connected in parallel to a power device for absorbing a peak voltage in the circuit. However, because alternating currents on both sides of the capacitor easily generate stray inductance at a connection terminal of the capacitor, the stray inductance may further cause voltage fluctuation to increase, damage a power device, and influence safety of a vehicle.

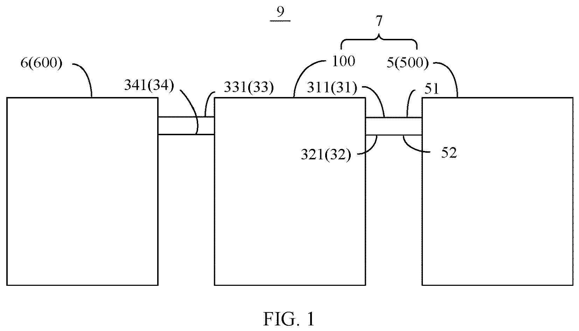

As shown in FIG. 1 to FIG. 7, a first aspect of the present disclosure provides a capacitor 100. The capacitor 100 includes a housing 1, a capacitor core 2, a first external terminal 31, a second external terminal 32, a third external terminal 33, and a fourth external terminal 34. The capacitor core 2 is located in the housing 1. The first external terminal 31 is electrically connected to a first end of the capacitor core 2. The first external terminal 31 includes a first lead-out terminal 311 located outside the housing 1. The second external terminal 32 is electrically connected to a second end of the capacitor core 2. The second external terminal 32 includes a second lead-out terminal 321 located outside the housing 1. The third external terminal 33 is electrically connected to the first end of the capacitor core 2. The third external terminal 33 includes a third lead-out terminal 331 located outside the housing 1. The fourth external terminal 34 is electrically connected to the second end of the capacitor core 2. The fourth external terminal 34 includes a fourth lead-out terminal 341 located outside the housing 1. Both the first lead-out terminal 311 and the second lead-out terminal 321 are configured to connect to a first external load apparatus 500. Both the third lead-out terminal 331 and the fourth lead-out terminal 341 are configured to connect to a second external load apparatus 600. The first lead-out terminal 311 and the third lead-out terminal 331 are located on different sides of the housing 1. The second lead-out terminal 321 and the fourth lead-out terminal 341 are located on different sides of the housing 1. The first lead-out terminal 311 extends out of the housing 1 in a first direction. The second lead-out terminal 321 and the first lead-out terminal 311 are stacked in a second direction perpendicular to the first direction.

In the capacitor 100, both the first lead-out terminal 311 and the second lead-out terminal 321 are configured to connect to the first external load apparatus 500. Currents at the first lead-out terminal 311 and the second lead-out terminal 321 have a same magnitude. In addition, the currents at the first lead-out terminal 311 and the second lead-out terminal 321 flow in opposite directions. It should be noted that a current direction mentioned in the present disclosure does not mean a flow direction of current in a three-dimensional space, but means a flow direction of a circuit in which the current uses the capacitor core 2 as a starting point in a flow path. For example, when current at the first lead-out terminal 311 flows from the first end of the capacitor core 2 to the first external load apparatus 500, current at the second lead-out terminal 321 flows from the first external load apparatus 500 to the second end of the capacitor core 2. That is, the currents at the first lead-out terminal 311 and the second lead-out terminal 321 flow in opposite directions, as described above. Similarly, both the third lead-out terminal 331 and the fourth lead-out terminal 341 are configured to connect to the second external load apparatus 600. Currents at the third lead-out terminal 331 and the fourth lead-out terminal 341 have a same magnitude. In addition, the currents at the third lead-out terminal 331 and the fourth lead-out terminal 341 flow in opposite directions.

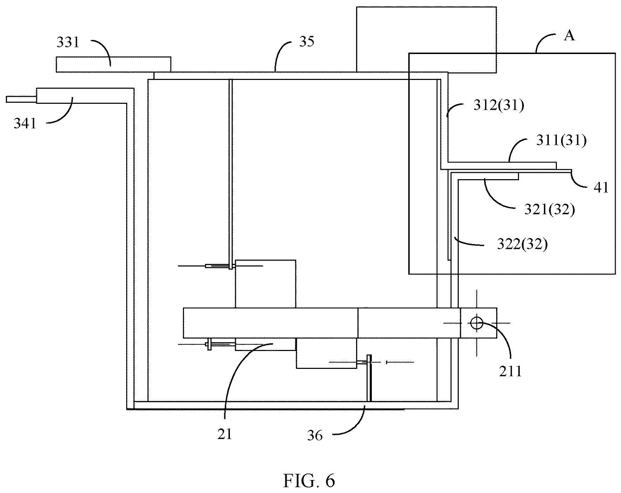

Because both the first lead-out terminal 311 and the third lead-out terminal 331 are electrically connected to the first end of the capacitor core 2, currents at the first lead-out terminal 311 and the third lead-out terminal 331 flow in a same direction. For example, when the current at the first lead-out terminal 311 flows from the first end of the capacitor core 2 to the first external load apparatus 500, current at the third lead-out terminal 331 also flows from the first end of the capacitor core 2 to the second external load apparatus 600. Because the currents at the first lead-out terminal 311 and the third lead-out terminal 331 have the same current direction, inductances generated by the currents at the first lead-out terminal 311 and the third lead-out terminal 331 also have the same direction, as shown in FIG. 2 and FIG. 6. The first lead-out terminal 311 and the third lead-out terminal 331 are disposed on different sides of the housing 1, so that a distance between the first lead-out terminal 311 and the third lead-out terminal 331 can be relatively large, thereby avoiding enhanced mutual coupling between inductances generated by the currents at the first lead-out terminal 311 and the third lead-out terminal 331, and helping to reduce mutual interference and influence of the inductances.

Similarly, as shown in FIG. 2 and FIG. 6, both the second lead-out terminal 321 and the fourth lead-out terminal 341 are electrically connected to the second end of the capacitor core 2. Currents at the second lead-out terminal 321 and the fourth lead-out terminal 341 flow in a same direction. Inductances generated by the currents at the second lead-out terminal 321 and the fourth lead-out terminal 341 also have the same direction. The second lead-out terminal 321 and the fourth lead-out terminal 341 are disposed on different sides of the housing 1, so that a distance between the second lead-out terminal 321 and the fourth lead-out terminal 341 can be relatively large, thereby avoiding enhanced mutual coupling between inductances generated by the currents at the second lead-out terminal 321 and the fourth lead-out terminal 341, and helping to reduce interference and influence of the inductances.

It follows that there is good separation between the first lead-out terminal 311 and the third lead-out terminal 331 of the capacitor 100, and there is good separation between the second lead-out terminal 321 and the fourth lead-out terminal 341, thereby avoiding enhanced coupling between stray inductances having the same direction, reducing mutual influence between inductances generated by the capacitor 100, and helping to improve stability and an anti-interference capability of the capacitor 100.

In an example implementation scenario, the capacitor 100 may be applied to a motor controller 7 of a vehicle. Both the first lead-out terminal 311 and the second lead-out terminal 321 of the capacitor 100 may be configured to connect to the power device 5. Both the third lead-out terminal 331 and the fourth lead-out terminal 341 may be configured to connect to a battery pack 6 of the vehicle. The capacitor 100 and the power device 5 generally form a low-voltage circuit through the first lead-out terminal 311 and the second lead-out terminal 321. The capacitor 100 and the battery pack 6 of a vehicle 9 generally form a high-voltage circuit through the third lead-out terminal 331 and the fourth lead-out terminal 341. In the capacitor 100 provided by the embodiment of the present disclosure, because there is good separation between the first lead-out terminal 311 and the third lead-out terminal 331, and there is good separation between the second lead-out terminal 321 and the fourth lead-out terminal 341, enhanced coupling between stray inductances having the same direction is avoided, thereby ensuring good stability of the capacitor 100, and further, reducing mutual influence between the high-voltage circuit and the low-voltage circuit, reducing interference of the stray inductances on the power device 5 or the battery pack 6, improving stability of the motor controller 7 and the battery pack 6, and improving overall safety of the vehicle.

In addition, both the first lead-out terminal 311 and the second lead-out terminal 321 are configured to connect to the first external load apparatus 500. The currents at the first lead-out terminal 311 and the second lead-out terminal 321 flow in opposite directions. When the capacitor 100 is connected to an alternating current circuit, stray inductances are separately generated when an alternating current passes through the first lead-out terminal 311 and the second lead-out terminal 321. Because the currents at the first lead-out terminal 311 and the second lead-out terminal 321 have opposite directions, directions of magnetic fields generated by the currents at the first lead-out terminal 311 and the second lead-out terminal 321 are also opposite. The first lead-out terminal 311 and the second lead-out terminal 321 are stacked in a second direction. As shown in FIG. 2, FIG. 6, and FIG. 7, a direction of a magnetic field generated by an alternating current at the first lead-out terminal 311 is opposite to a direction of a magnetic field generated by an alternating current at the second lead-out terminal 321. Therefore, the magnetic field generated at the first lead-out terminal 311 and the magnetic field generated at the second lead-out terminal 321 can at least partially cancel each other, thereby reducing stray inductance on the capacitor 100, and reducing influence of the stray inductance on the capacitor 100 and the circuit in which the capacitor 100 is located.

In the foregoing embodiment in which the capacitor 100 is applied to the motor controller 7 of the vehicle 9, because the magnetic field generated at the first lead-out terminal 311 and the magnetic field generated at the second lead-out terminal 321 can at least partially cancel each other, the stray inductance on the capacitor 100 can be reduced. The capacitor 100 has a more stable function of "blocking a direct current while passing an alternating current", thereby effectively absorbing a peak voltage in the circuit, stabilizing a voltage change between the power device 5 and the battery pack 6 of the vehicle 9, improving stability of a power system of the vehicle 9, and ensuring safety of the vehicle 9.

In the foregoing technical solution, the capacitor 100 enables good separation between the first lead-out terminal 311 and the third lead-out terminal 331, and good separation between the second lead-out terminal 321 and the fourth lead-out terminal 341, thereby avoiding enhanced coupling of magnetic fields between the first lead-out terminal 311 and the third lead-out terminal 331 and between the second lead-out terminal 321 and the fourth lead-out terminal 341, and reducing mutual influence between inductances generated by the capacitor 100. In addition, a magnetic field generated at the first lead-out terminal 311 and a magnetic field generated at the second lead-out terminal 321 can at least partially cancel each other, thereby reducing stray inductance on the capacitor 100, reducing influence of the inductance on the circuit, and improving stability and an anti-interference capability of the capacitor 100.

In the foregoing embodiment, to stack the first lead-out terminal 311 and the second lead-out terminal 321 in the second direction, optionally, both the first lead-out terminal 311 and the second lead-out terminal 321 may extend out of the housing 1 from a first side of the housing 1. The first side here may be a side 13 of the housing 1. For example, as shown in FIG. 2, both the first lead-out terminal 311 and the second lead-out terminal 321 may extend out of the housing 1 from the side 13 of the housing 1. Because both the first lead-out terminal 311 and the second lead-out terminal 321 extend out of the first side of the housing 1, the first lead-out terminal 311 and the second lead-out terminal 321 can be connected to the first external load apparatus 500 on the first side, thereby facilitating arrangement of the first external load apparatus 500, and shortening a connection distance of the circuit. As the connection distance of the circuit is shortened, paths of currents flowing at the first lead-out terminal 311 and the second lead-out terminal 321 are shortened, and stray inductances generated by the currents are also reduced. Therefore, the stray inductances of the capacitor 100 is further reduced.

Optionally, both the third lead-out terminal 331 and the fourth lead-out terminal 341 may extend out of the housing 1 from a second side of the housing 1. The first side of the housing 1 is opposite to the second side of the housing 1. That is, the first lead-out terminal 311 and the third lead-out terminal 331 can be located on different sides. In addition, the second lead-out terminal 321 and the fourth lead-out terminal 341 can also be located on different sides. Both the third lead-out terminal 331 and the fourth lead-out terminal 341 are located on the second side, thereby facilitating arrangement of the second external load apparatus 600, shortening a connection distance of the circuit, and reducing a loss between the first external load apparatus 500 and the second external load apparatus 600.

To facilitate distinguishing between the third lead-out terminal 331 and the fourth lead-out terminal 341, as shown in FIG. 2, FIG. 6, and FIG. 7, optionally, heights of the third lead-out terminal 331 and the fourth lead-out terminal 341 may be different. When the third lead-out terminal 331 and the fourth lead-out terminal 341 are separately connected to the second external load apparatus 600, an operator can distinguish a relationship between the third lead-out terminal 331 and the fourth lead-out terminal 341 according to arrangement of the third lead-out terminal 331 and the fourth lead-out terminal 341 at different heights, thereby ensuring that the third lead-out terminal 331 and the fourth lead-out terminal 341 can be correctly connected to the second external load apparatus 600. In particular, in an embodiment where the second external load apparatus 600 is of a high-voltage electrical structure, for example, the second external load apparatus 600 is a battery pack 6 of the vehicle 9. Because a voltage of the battery pack 6 is high, when the third lead-out terminal 331 and the fourth lead-out terminal 341 of the capacitor 100 are incorrectly connected to the battery pack 6, breakdown and failure of the capacitor 100 and the first external load apparatus 500 occur easily. Therefore, in the foregoing embodiment, heights of the third lead-out terminal 331 and the fourth lead-out terminal 341 are different, thereby helping the operator distinguish and identify the third lead-out terminal and the fourth lead-out terminal to perform a correct mounting operation.

Inductances between the first lead-out terminal 311 and the second lead-out terminal 321 influence each other. To enable the magnetic field generated at the first lead-out terminal 311 and the magnetic field generated at the second lead-out terminal 321 to cancel each other as much as possible, optionally, a projection of the first lead-out terminal 311 in the second direction may be completely located within a projection of the second lead-out terminal 321 in the second direction, or the projection of the second lead-out terminal 321 in the second direction may be completely located within the projection of the first lead-out terminal 311 in the second direction. That is, a projection of one of the first lead-out terminal 311 and the second lead-out terminal 321 in the second direction is completely located within a projection of the other of the first lead-out terminal and the second lead-out terminal in the second direction, so that a magnetic field generated by one of the first lead-out terminal 311 and the second lead-out terminal 321 can be canceled as much as possible by a magnetic field generated by the other of the first lead-out terminal and the second lead-out terminal, thereby minimizing stray inductance on the capacitor 100.

In an example implementation, as shown in FIG. 3 and FIG. 4, optionally, in a width direction of the first lead-out terminal 311, a width of the first lead-out terminal 311 is the same as a width of the second lead-out terminal 321, and the width direction is perpendicular to the first direction. In this embodiment, the width of the first lead-out terminal 311 is the same as the width of the second lead-out terminal 321. Paths of currents flowing through the first lead-out terminal 311 and the second lead-out terminal 321 have a same width, so that magnetic fields generated at the first lead-out terminal 311 and the second lead-out terminal 321 can cancel each other as much as possible to minimize stray inductance on the capacitor 100.

The smaller a spacing between the first lead-out terminal 311 and the second lead-out terminal 321 in the second direction, the better a cancellation effect of the magnetic fields generated at the first lead-out terminal 311 and the second lead-out terminal 321. Theoretically, when the first lead-out terminal 311 and the second lead-out terminal 321 are completely overlapped, the magnetic fields at the first lead-out terminal 311 and the second lead-out terminal 321 can be completely canceled. However, in actual application, optionally, the spacing between the first lead-out terminal 311 and the second lead-out terminal 321 in the second direction may be less than or equal to 1 mm. In this embodiment, the first lead-out terminal 311 and the second lead-out terminal 321 can be arranged separately by avoiding position interference, and further, can ensure that inductances at the first lead-out terminal 311 and the second lead-out terminal 321 have a good cancellation effect. In the foregoing embodiment, optionally, the spacing between the first lead-out terminal 311 and the second lead-out terminal 321 in the second direction may be 0.5 mm.

Both the first lead-out terminal 311 and the second lead-out terminal 321 are located outside the housing 1. To connect the first lead-out terminal 311 to the first end of the capacitor core 2, as shown in FIG. 4 to FIG. 7, optionally, the first external terminal 31 further includes a first extension section 312. One end of the first extension section 312 is electrically connected to the first end of the capacitor core 2, and the other end of the first extension section 312 is electrically connected to the first lead-out terminal 311. To connect the second lead-out terminal 321 to the second end of the capacitor core 2, optionally, the second external terminal 32 includes a second extension section 322. One end of the second extension section 322 is electrically connected to the second end of the capacitor core 2, and the other end of the second extension section 322 is electrically connected to the second lead-out terminal 321.

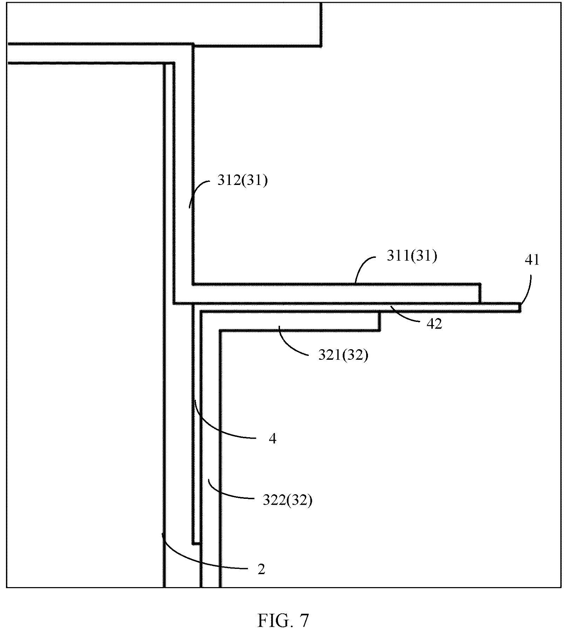

In an example implementation, as shown in FIG. 6 and FIG. 7, optionally, the first lead-out terminal 311 and the second lead-out terminal 321 may be located in the middle of the side 13 of the housing 1, and the middle of the side 13 of the housing 1 may be provided with an opening, through which the first extension section 312 and the second extension section 322 pass. Optionally, the first extension section 312 may extend downward from the first end of the capacitor core 2 and pass through the opening to connect to the first lead-out terminal 311. The second extension section 322 may extend upward from the second end of the capacitor core 2 to the opening to connect to the second lead-out terminal 321.

The currents at the first lead-out terminal 311 and the second lead-out terminal 321 flow in opposite directions. To avoid a short circuit between the first lead-out terminal 311 and the second lead-out terminal 321, as shown in FIG. 3, FIG. 6, and FIG. 7, optionally, the capacitor 100 may further include a power isolation sheet 4. At least a part of the power isolation sheet 4 is disposed between the first lead-out terminal 311 and the second lead-out terminal 321 to avoid the short circuit between the first lead-out terminal 311 and the second lead-out terminal 321.

In the foregoing embodiment, as shown in FIG. 3, optionally, the power isolation sheet 4 may be provided with a first edge 41 away from the housing 1, a second edge 42 located on one side of the first edge 41, and a third edge 43 located on the other side of the first edge 41. In this embodiment, as an embodiment, the first edge 41, the second edge 42, and the third edge 43 all protrude from the first lead-out terminal 311 or the second lead-out terminal 321. As another embodiment, the first edge 41, the second edge 42, and the third edge 43 all protrude from the first lead-out terminal 311 and the second lead-out terminal 321, to ensure good insulation performance between the first lead-out terminal 311 and the second lead-out terminal 321, and avoid the short circuit between the first lead-out terminal 311 and the second lead-out terminal 321.

Optionally, there may be a plurality of power isolation sheets 4. The plurality of power isolation sheets 4 are stacked in the second direction to reduce a risk of breakdown of the power isolation sheets 4 and ensure safety of the capacitor 100.

As shown in FIG. 6, optionally, there may be a plurality of capacitor cores 2. The capacitor 100 may further include a first busbar 35 and a second busbar 36. First ends of the plurality of capacitor cores 2 are all electrically connected to the first busbar 35. Second ends of the plurality of capacitor cores 2 are all electrically connected to the second busbar 36. The first external terminal 31 is electrically connected to the first busbar 35. The second external terminal 32 is electrically connected to the second busbar 36. In this embodiment, the first ends of the plurality of capacitor cores 2 may be all electrically connected to the first external terminal 31 through the first busbar 35, thereby simplifying a connection relationship between the plurality of capacitor cores 2 and the first external terminal 31. The second ends of the plurality of capacitor cores 2 may be all electrically connected to the second external terminal 32 through the second busbar 36, thereby simplifying a connection relationship between the plurality of capacitor cores 2 and the second external terminal 32. In this way, a circuit of the capacitor 100 is simpler and more compact, thereby helping to shorten a current flow path, and reducing stray inductance.

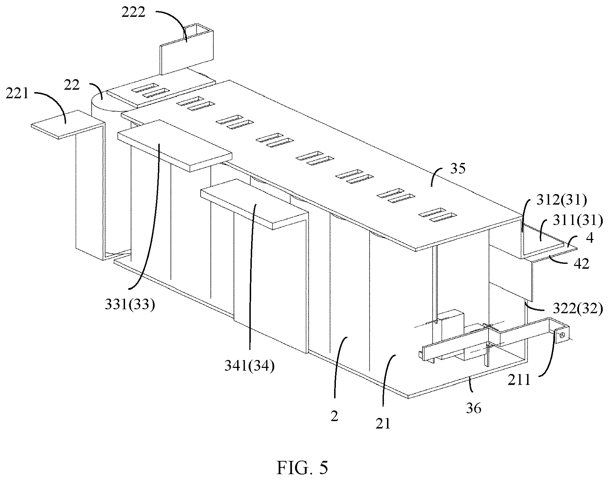

The capacitor 100 may further include a safety capacitor 21. As shown in FIG. 5, optionally, both a first end of the safety capacitor 21 and the first end of the capacitor core 2 may be electrically connected to the first busbar 35. Both a second end of the safety capacitor 21 and the second end of the capacitor core 2 may be electrically connected to the second busbar 36. That is, the safety capacitor 21 and the capacitor core 2 share the first busbar 35 and the second busbar 36, thereby simplifying a circuit connection relationship of the safety capacitor 21, helping to shorten the current flow path, and reducing stray inductance.

As shown in FIG. 5, optionally, the capacitor 100 may further include a safety capacitor 21 and a boost capacitor 22. The boost capacitor 22 is located on one side of the capacitor core 2, and the safety capacitor 21 is located on the other side of the capacitor core 2. In this embodiment, the boost capacitor 22 and the safety capacitor 21 are located on two sides of the capacitor core 2, respectively, to avoid mutual interference between the safety capacitor 21 and the boost capacitor 22.

Optionally, the first lead-out terminal 311 and the second lead-out terminal 321 may be located on a first side of the housing 1. The third lead-out terminal 331 and the fourth lead-out terminal 341 may be located on a second side of the housing 1. The first side and the second side are disposed at intervals in the first direction. In this embodiment, optionally, the boost capacitor 22 and the safety capacitor 21 may be respectively located on two sides of the capacitor core 2 in a width direction perpendicular to the first direction and the second direction. In this embodiment, the boost capacitor 22 and the safety capacitor 21 are arranged in the width direction. A distance between the first side and the second side of the housing 1 is not increased, to avoid an increase in a spacing between the first lead-out terminal 311 and the second lead-out terminal 321 and in a spacing between the third lead-out terminal 331 and the fourth lead-out terminal 341. In this way, a current flow path of the capacitor 100 remains unchanged, thereby reducing influence of arrangement of the boost capacitor 22 and the safety capacitor 21 on a length of a current path, and reducing stray inductance of the capacitor 100.

Optionally, the housing 1 of the capacitor 100 may be further filled with an epoxy colloid. The epoxy colloid has good sealing performance and insulation performance, and can play a role in sealing and protecting the capacitor 100. In a process of manufacturing the capacitor 100, a liquid epoxy structural adhesive is usually filled into the housing 1 of the capacitor 100, and the epoxy structural adhesive is cured into an epoxy colloid through a heating process. Optionally, the epoxy colloid may be formed by curing an epoxy structural adhesive through a stepwise heating process. The stepwise heating process herein means that the epoxy structural adhesive is heated using a stepwise temperature that increases from a low temperature to a high temperature. For example, after a heater maintains a temperature of 60°C to heat the epoxy structural adhesive for a specific time, the heater maintains a temperature of 70°C for a specific time to heat the epoxy structural adhesive for a specific time..., and the heater maintains a temperature of 120°C for a specific time to heat the epoxy structural adhesive for a specific time. The stepwise heating process facilitates full conduction of heat, so that water in the epoxy structural adhesive can be fully evaporated. Foams and gaps of the epoxy structural adhesive in a curing process are reduced, so that a cured epoxy colloid has a good sealing effect and a strong resistance to entry of external moisture and water.

The capacitor 100 generates heat in a working process. To achieve heat dissipation for the capacitor 100, as shown in FIG. 2 and FIG. 4, optionally, the capacitor 100 may further include a thermally conductive plate 14. A thermally conductive plate mounting groove 15 is formed on the housing 1. The thermally conductive plate 14 is embedded in the thermally conductive plate mounting groove 15. In this embodiment, optionally, there may be a plurality of thermally conductive plate mounting grooves 15. The plurality of thermally conductive plate mounting grooves 15 may be formed on different side walls of the housing 1, to separately mount a plurality of thermally conductive plates 14, thereby achieving sufficient heat dissipation for the capacitor 100. In an embodiment in which the first lead-out terminal 311 and the second lead-out terminal 321 are led out from the first side of the housing 1, and the third lead-out terminal 331 and the fourth lead-out terminal 341 are led out from the second side of the housing 1, a thermally conductive plate mounting groove 15 may be disposed on a top 11 or a bottom 12 of the housing 1, or a thermally conductive plate mounting groove 15 may be disposed on both the top 11 and the bottom 12 of the housing 1.

A second aspect of the present disclosure provides a motor controller 7. The motor controller 7 includes a power device 5 and the capacitor 100. The power device 5 is the first external load apparatus 500.

Because the capacitor 100 can avoid enhanced coupling between stray inductances having the same direction, mutual influence between inductances generated by the capacitor 100 is reduced. In addition, a magnetic field generated at the first lead-out terminal 311 and a magnetic field generated at the second lead-out terminal 321 can at least partially cancel each other, thereby further reducing stray inductance on the capacitor 100, reducing influence of the stray inductance on the power device 5, helping to improve stability and an anti-interference capability of the capacitor 100 and the power device 5, and ensuring that the motor controller 7 has stable functionality.

The motor controller 7 may be applied to a plurality of application scenarios such as a vehicle, an electric traction device, or an electric processing device. The motor controller 7 may be configured to control, according to a set or input requirement, a motor to work according to a set direction, a set speed, a set angle, and a set response time. A structure, a function, an application scenario, and the like of the motor controller 7 are not specifically limited in the present disclosure. In an embodiment in which the motor controller 7 is applied to the vehicle 9, optionally, the second external load apparatus 600 may be a battery pack 6.

In the related art, a connection terminal of a capacitor 100 and a connection terminal of an external load apparatus are usually connected through a bolt. Because bolt connection needs to occupy a specific space on the connection terminal, a problem of a large size of the connection terminal exists, and a large size of the connection terminal results in a long current path, so that strength of an inductance generated by the current is large. To improve stability of the motor controller 7, optionally, the power device 5 may be provided with a first connection terminal 51 and a second connection terminal 52. The first lead-out terminal 311 is connected to the first connection terminal 51 through a fusion welding process, and the second lead-out terminal 321 is connected to the second connection terminal 52 through the fusion welding process. Compared with the technical solution in the related art, in an embodiment provided in the present disclosure, the first lead-out terminal 311 is connected to the first connection terminal 51 through the fusion welding process, that is, both the first lead-out terminal 311 and the first connection terminal 51 may eliminate a screw hole. Therefore, sizes of the first lead-out terminal 311 and the first connection terminal 51 can be reduced. Similarly, the second lead-out terminal 321 is connected to the second connection terminal 52 through the fusion welding process, and both the second lead-out terminal 321 and the second connection terminal 52 may eliminate a screw hole. Sizes of the second lead-out terminal 321 and the second connection terminal 52 are reduced, thereby helping to shorten a current path between the power device 5 and the capacitor 100. In this way, a structure of the motor controller 7 is more compact, thereby reducing generation of stray inductance, and improving overall stability and an anti-interference capability of the motor controller 7.

A third aspect of the present disclosure provides a vehicle 9, including a battery pack 6 and the motor controller 7. The battery pack 6 is the second external load apparatus 600. The vehicle 9 herein may be an electric vehicle, a hybrid vehicle, or a new energy vehicle. This is not specifically limited in the present disclosure. Because the motor controller 7 provided in this embodiment of the present disclosure has the advantages of a strong anti-interference capability and high stability, a vehicle using the motor controller 7 can have good stability and safety.

The foregoing describes preferred implementations of the present disclosure in detail with reference to the accompanying drawings. However, the present disclosure is not limited to specific details in the foregoing implementations. Within the scope of the technical concept of the present disclosure, a plurality of simple variations may be made to the technical solution of the present disclosure, and all these simple variations fall within the protection scope of the present disclosure.

In addition, it should be noted that various specific technical features described in the foregoing specific implementations may be combined in any appropriate manner without contradiction. To avoid unnecessary repetition, various possible combinations are not further described in the present disclosure.

In addition, any combination of various different implementations of the present disclosure may be made. The combination should also be considered as the content disclosed in the present disclosure as long as the combination does not violate the idea of the present disclosure.

## Claims

1. A capacitor (100), comprising:
a housing (1);
a capacitor core (2), located in the housing (1);
a first external terminal (31), electrically connected to a first end of the capacitor core (2), wherein the first external terminal (31) comprises a first lead-out terminal (311) located outside the housing (1);
a second external terminal (32), electrically connected to a second end of the capacitor core (2), wherein the second external terminal (32) comprises a second lead-out terminal (321) located outside the housing (1);
a third external terminal (33), electrically connected to the first end of the capacitor core (2), wherein the third external terminal (33) comprises a third lead-out terminal (331) located outside the housing (1); and
a fourth external terminal (34), electrically connected to the second end of the capacitor core (2), wherein the fourth external terminal (34) comprises a fourth lead-out terminal (341) located outside the housing (1), wherein
both the first lead-out terminal (311) and the second lead-out terminal (321) are configured to connect to a first external load apparatus (500), both the third lead-out terminal (331) and the fourth lead-out terminal (341) are configured to connect to a second external load apparatus (600), the first lead-out terminal (311) and the third lead-out terminal (331) are located on different sides of the housing (1), the second lead-out terminal (321) and the fourth lead-out terminal (341) are located on different sides of the housing (1), the first lead-out terminal (311) extends out of the housing (1) in a first direction, and the second lead-out terminal (321) and the first lead-out terminal (311) are stacked in a second direction perpendicular to the first direction.

2. The capacitor (100) according to claim 1, wherein both the first lead-out terminal (311) and the second lead-out terminal (321) extend out of the housing (1) from a first side of the housing (1), both the third lead-out terminal (331) and the fourth lead-out terminal (341) extend out of the housing (1) from a second side of the housing (1), and the first side of the housing (1) is opposite to the second side of the housing (1).

3. The capacitor (100) according to claim 2, wherein heights of the third lead-out terminal (331) and the fourth lead-out terminal (341) are different.

4. The capacitor (100) according to any one of claims 1 to 3, wherein a projection of the first lead-out terminal (311) in the second direction is completely located within a projection of the second lead-out terminal (321) in the second direction; or
the projection of the second lead-out terminal (321) in the second direction is completely located within the projection of the first lead-out terminal (311) in the second direction.

5. The capacitor (100) according to any one of claims 1 to 4, wherein a spacing between the first lead-out terminal (311) and the second lead-out terminal (321) in the second direction is less than or equal to 1 mm.

6. The capacitor (100) according to any one of claims 1 to 5, wherein in a width direction of the first lead-out terminal (311), a width of the first lead-out terminal (311) is the same as a width of the second lead-out terminal (321), and the width direction is perpendicular to the first direction.

7. The capacitor (100) according to any one of claims 1 to 6, wherein the first external terminal (31) further comprises a first extension section (312), one end of the first extension section (312) is electrically connected to the first end of the capacitor core (2), and the other end of the first extension section (312) is electrically connected to the first lead-out terminal (311); and
the second external terminal (32) comprises a second extension section (322), one end of the second extension section (322) is electrically connected to the second end of the capacitor core (2), and the other end of the second extension section (322) is electrically connected to the second lead-out terminal (321), wherein
at least a part of the first extension section (312) and at least a part of the second extension section (322) are stacked.

8. The capacitor (100) according to any one of claims 1 to 7, wherein the capacitor (100) further comprises a power isolation sheet (4), at least a part of the power isolation sheet (4) is disposed between the first lead-out terminal (311) and the second lead-out terminal (321), the power isolation sheet (4) is provided with a first edge (41) away from the housing (1), a second edge (42) located on one side of the first edge (41), and a third edge (43) located on the other side of the first edge (41), and the first edge (41), the second edge (42), and the third edge (43) all protrude from the first lead-out terminal (311) and/or the second lead-out terminal (321).

9. The capacitor (100) according to any one of claims 1 to 8, wherein the housing (1) is filled with an epoxy colloid, and the epoxy colloid is formed by curing an epoxy structural adhesive through a stepwise heating process.

10. The capacitor (100) according to any one of claims 1 to 9, wherein the capacitor (100) further comprises a thermally conductive plate (14), a thermally conductive plate mounting groove (15) is formed on the housing (1), and the thermally conductive plate (14) is embedded in the thermally conductive plate mounting groove (15).

11. A motor controller (7), comprising a power device (5) and the capacitor (100) according to any one of claims 1 to 10, wherein the power device (5) is the first external load apparatus (500).

12. The motor controller (7) according to claim 11, wherein the power device (5) is provided with a first connection terminal (51) and a second connection terminal (52), the first lead-out terminal (311) is connected to the first connection terminal (51) through a fusion welding process, and the second lead-out terminal (321) is connected to the second connection terminal (52) through the fusion welding process.

13. A vehicle (9), comprising a battery pack (6) and the motor controller (7) according to claim 11 or 12, wherein the battery pack (6) is the second external load apparatus (600).
